# EUROPEAN PATENT SPECIFICATION

(11) **EP 4 641 265 B1**
(45) Date of publication and mention of the grant of the patent: **16.09.2026**
(21) Application number: 25172172.6
(22) Date of filing: 24.04.2025
(51) Int. Cl.: G02B 3/00, G02B 27/09, G03B 21/20

(54) **PROJECTING APPARATUS AND LIGHT UNIFORMIZATION SYSTEM THEREOF**
PROJEKTIONSVORRICHTUNG UND LICHTVEREINHEITLICHUNGSSYSTEM DAFÜR
APPAREIL DE PROJECTION ET SYSTÈME D'UNIFORMISATION DE LUMIÈRE ASSOCIÉ

(30) Priority: 26.04.2024 US 202463638952 P; 09.07.2024 CN 202410913138
(43) Date of publication of application: 29.10.2025
(73) Proprietor: Coretronic Corporation, Hsin-Chu 300 (TW)
(72) Inventor: LIN, Yan-Wen, Hsin-Chu 300 (TW); LU, Chun-Hsin, Hsin-Chu 300 (TW); CHUNG, Wen-Chieh, Hsin-Chu 300 (TW)
(74) Representative: Ter Meer Steinmeister & Partner

(56) References cited:
- WO-A1-2019/071951
- JP-A- 2023 065 241
- US-A1- 2022 141 432

## Description

This non-provisional application claims priority on China Patent Application No. 2024109131384 filed on July 9, 2024 on Provisional Application Number 63/638,952, filed April 26, 2024, entitled "Light Uniformizing System and Projection Device Utilizing the Same".

### BACKGROUND OF THE INVENTION

### Field of the Invention

The invention relates to a technical field of projection equipment, and more particularly to a light uniformization system configured to uniformize light beams and a projection apparatus equipped with the light uniformization system.

### Description of the Related Art

In a projection apparatus, light beams generated by a point light source are uniformized to form uniformized light beams having a two-dimensional light field. The uniformized light beams pass through a light modulation module (such as a digital mirror device module, DMD) to form an image light beam. The image light beam passes through a projecting lens to be projected onto a screen to display an image. Therefore, the light uniformization system uniformizing the point light beams serves as an important component for the formation of a two-dimensional light field.

However, the conventional light uniformization system has so many components that a light engine utilizing the conventional light uniformization system is often provided with a larger size, and the size thereof is difficult to reduce. Moreover, additional calibration processes may be necessary if the number of components is increased, which causes a more complicated assembly process.

The information disclosed in this Background section is only for enhancement of understanding of the background of the described technology, and therefore, it may contain information that does not form the prior art that is already known to a person of ordinary skill in the art. Furthermore, the information disclosed in the Background section does not mean that one or more problems to be resolved by one or more embodiments of the disclosure was acknowledged by a person of ordinary skill in the art.

WO 2019/071951 A1 relates to a fly-eye lens group and a projection device.

US 2022/141432 A1 relates to a projection display device.

JP 2023 065241 A relates to an image projection apparatus that projects light modulated by a video signal.

### BRIEF SUMMARY OF THE INVENTION

The invention provides a light uniformization system and a projection apparatus utilizing the same to solve the problems of the oversized light engine and the complicated assembly process due to the increased number of components caused by multiple lens array elements being separately mounted

The object is solved by the features of the independent claims. Preferred embodiments are given in the dependent claims.

Other objects and advantages of the present invention are to be understood from technical features disclosed in the present invention. To realize one or more or all of the aforementioned objects or other related objects, the present invention provides an embodiment of a light uniformization system for uniformizing light beams from a light source module. The light beams enter the light uniformization system along a first direction and exit the light uniformization system along a direction parallel to the first direction to form uniformized light beams. The light uniformization system includes a lens array element including a first array region and a second array region connected to each other and arranged along a second direction. The first array region includes a first light incident surface, a first light exiting surface and a plurality of first micro lenses. The light beams enter the first array region through the first light incident surface along the first direction, pass through the first micro lenses, and exit the first array region through the first light exiting surface to form first light beams. The second array region includes a second light incident surface, a second light exiting surface and a plurality of second micro lenses. The first light beams enter the second array region through the second light incident surface, pass through the second micro lenses and exit the second array region through the second light exiting surface to form second light beams. The first light incident surface and the second light exiting surface are located on a same surface of the lens array element, and the first direction is perpendicular to the second direction.

The present invention provides an embodiment of a projection apparatus comprising a light source configured to emit light beams, the aforementioned light uniformization system disposed in an optical path of the light beams, a light modulation module disposed in an optical path of the uniformized light beams and configured to receive the uniformized light beams and convert the uniformized light beams to image light, and a projecting lens disposed in an optical path of the image light and configured to project the image light. The light beams are incident to the lens array element through the first light incident surface of the first array region and uniformized several times in the light uniformization system, and the light beams exit the light uniformization system to form the uniformized light beams.

In one or more embodiments, the second light beams may exit the second array region through the second light exiting surface and may leave the light uniformization system to form the uniformized light beams.

In one or more embodiments, a light exiting direction of the first light beams from the first lens array region and a light exiting direction of the second light beams from the second lens array region may be opposite and both parallel to the first direction.

In one or more embodiments, the lens array element may further comprise a connecting region located between the first array region and the second array region in the second direction and connecting the first array region and the second array region.

In one or more embodiments, the light beams may not pass through the connecting region.

In one or more embodiments, a distance of the light beams propagating in the first array region may be the same as a distance of the first light beams propagating in the second array region.

In one or more embodiments, the light uniformization system may further comprise a first optical path folding unit disposed in an optical path of the first light beams between the first light exiting surface and the second light incident surface to change a transmission direction of the first light beams.

In one or more embodiments, the first light beams may enter the first optical path folding unit along the first direction and may exit the first optical path folding unit along a first transmission direction.

In one or more embodiments, the first transmission direction may be opposite to and parallel to the first direction.

In one or more embodiments, the optical path of the first light beams between the first light exiting surface and the second light incident surface may be U-shaped.

In one or more embodiments, the light uniformization system may comprise a first light condensing unit disposed in the optical path of the first light beams between the first light exiting surface and the second light incident surface to converge the first light beams.

In one or more embodiments, the first light condensing unit may comprise a first condensing lens and a second condensing lens.

In one or more embodiments, the first optical path folding unit may comprise a first reflecting mirror and a second reflecting mirror.

In one or more embodiments, the first condensing lens may be disposed between the first array region and the first reflecting mirror.

In one or more embodiments, the second condensing lens may be disposed between the second reflecting mirror and the second array region.

In one or more embodiments, the first light beams converged by the first condensing lens may propagate to the first reflecting mirror of the first optical path folding unit, which enables the first light beams to propagate to the second reflecting mirror along the second direction, which changes a transmission direction of the first light beams, whereby the first light beams leave the second reflecting mirror along the first transmission direction and pass through the second condensing lens and the second array region sequentially.

In one or more embodiments, the light uniformization system may further comprise a first light diffusing element disposed between the second reflecting mirror and the second array region.

In one or more embodiments, the first light beams passing through the first light diffusing element may be incident to the second light incident surface.

In one or more embodiments, the light uniformization system may further comprise a second light diffusing element disposed in front of the first light incident surface.

In one or more embodiments, the light beams may pass through second light diffusing element before the light beams may incident to the first light incident surface.

In one or more embodiments, the lens array element may further comprise a third array region comprising a third light incident surface, a third light exiting surface and a plurality of third micro lenses.

In one or more embodiments, the first array region, the second array region and the third array region may be arranged along the second direction sequentially.

In one or more embodiments, the second array region may be located between the first array region and the third array region.

In one or more embodiments, the second array region may connect with the first array region and the third array region.

In one or more embodiments, the second light beams may enter the third array region through the third light incident surface, may pass through the third micro lenses and may exit the third array region through the third light exiting surface along the first direction to form third light beams.

In one or more embodiments, the first light incident surface, the second light exiting surface and the third light incident surface may be located on a same surface of the lens array element.

In one or more embodiments, the third light beams may exit the third light exiting surface and may leave the light uniformization system to form the uniformized light beams.

In one or more embodiments, the third light beams and the first light beams may exit the lens array element along the first direction.

In one or more embodiments, the light uniformization system may comprise a second optical path folding unit disposed in an optical path between the second light exiting surface and the third light incident surface to change a transmission direction of the second light beams.

In one or more embodiments, the second light beams may enter the second optical path folding unit along the first transmission direction parallel to the first direction and leave the second optical path folding unit along the first direction opposite and parallel to the first transmission direction.

In one or more embodiments, the optical path of the second light beams between the second light exiting surface and the third light incident surface may be U-shaped.

In one or more embodiments, the light uniformization system may comprise a second light condensing element disposed on the optical path of the second light beams between the second light exiting surface and the third light incident surface to converge the second light beams.

In one or more embodiments, the second optical path folding unit may comprise a third reflecting mirror and a fourth reflecting mirror.

In one or more embodiments, the second light beams may exit the second array region from the second light exiting surface and may propagate to the third reflecting mirror along the first transmission direction, which enables the second light beams to propagate to the fourth reflecting mirror.

In one or more embodiments, a transmission direction of the second light beams may be changed, whereby the second light beams may exit the fourth reflecting mirror before the second light beams enter the third array region.

In one or more embodiments, the light modulation module may comprise an optical element, a prism element and at least one light modulation element.

In one or more embodiments, the uniformized light beams may pass through the optical element and the prism element and may incident on the at least one light modulation element for converting the uniformized light beams to the image light, and the image light may propagate to the projecting lens.

In one or more embodiments, the light uniformization system, the light modulation module and the projecting lens may be disposed on a first plane defined by the first direction and the second direction.

In one or more embodiments, orthographic projections of the light modulation module and the projecting lens may not overlap.

In one or more embodiments, the second direction may be parallel to the direction of gravity, and the first plane is perpendicular to a horizontal plane.

In one or more embodiments, a third direction perpendicular to the first plane is defined, and an orthographic projection of the second light exiting surface of the second array region on a second plane defined by the second direction and the third direction may be located between an orthographic projection of the first light incident surface of the first array region on the second plane and an orthographic projection of a light exiting surface of the projecting lens on the second plane.

In one or more embodiments, a first plane may be defined by the first direction and the second direction, a third direction may be perpendicular to the first plane, and a third plane may be defined by the first direction and the third direction.

In one or more embodiments, the light uniformization system may be disposed on the first plane, and orthographic projections of the light source module and the light uniformization system on the first plane may not overlap.

In one or more embodiments, the light modulation module and the projection lens may be disposed on the third plane, and orthographic projections of the light modulation module and the projecting lens may not overlap.

In one or more embodiments, an orthographic projection of the second light exiting surface of the second array region and an orthographic projection of a light exiting surface of the projecting lens may be arranged along the third direction on a second plane defined by the second direction and the third direction, and the orthographic projection of the second light exiting surface of the second array region and an orthographic projection of the first light incident surface of the first array region may be arranged along the second direction on the second plane.

In one or more embodiments, the light source module may comprise a plurality of laser light emitting elements emitting light beams of different colors.

As aforementioned, the light uniformization system and the projection apparatus utilizing the same have at least one of the following advantageous effects. The integrally-structured lens array element can be manufactured with a single mold, and alignment and calibration are inherently accomplished, for the manufacturing process meets the design requirements. As no assembly process is needed for the integrally-structured lens array element, the manufacturing cost is lowered and the manufacturing process is simplified. The integrally-structured lens array element has fewer components, thereby reducing the size of the light engine. Moreover, the present invention utilizes the static lens array element to eliminate speckles of light spots of the light beams, and the number of movable diffusing elements is also reduced, thereby promoting reliability and the user experience.

Other objectives, features and advantages of the present invention will be further understood from the further technological features disclosed by the embodiments of the present invention, wherein there are shown and described preferred embodiments of this invention, simply by way of illustration of modes best suited to carry out the invention.

A detailed description is given in the following embodiments with reference to the accompanying drawings.

### BRIEF DESCRIPTION OF THE DRAWINGS

The invention can be more fully understood by reading the subsequent detailed description and examples with references made to the accompanying drawings, wherein:
Fig. 1 is a schematic view of an embodiment of a light uniformization system of the invention;
Fig. 2 is a schematic view of a lens array element of the light uniformization system of Fig. 1;
Fig. 3 is a schematic view of another embodiment of a light uniformization system of the invention;
Fig. 4 is a schematic view of a lens array element of the light uniformization system of Fig. 3;
Fig. 5 is a perspective view of an embodiment of a projection apparatus of the invention;
Fig. 6 side view of the projection apparatus of Fig. 5, wherein a light emitting element 22 is omitted;
Fig. 7 rear view of the projection apparatus of Fig. 5, wherein a light emitting element 21 is omitted;
Fig. 8 is a perspective view of another embodiment of a projection apparatus of the invention;
Fig. 9 is a side view of the projection apparatus of Fig. 8;
Fig. 10 rear view of the projection apparatus of Fig.8, with the light emitting element 21 omitted;
Fig. 11 is a top view of the projection apparatus of Fig. 8; and
Fig. 12 is a perspective view of another embodiment of a projection apparatus of the invention.

### DETAILED DESCRIPTION OF THE INVENTION

In the following detailed description of the preferred embodiments, reference is made to the accompanying drawings which form a part hereof, and in which are shown by way of illustration specific embodiments in which the invention may be practiced. In this regard, directional terminology, such as "top," "bottom," "front," "back," etc., is used with reference to the orientation of the Figure(s) being described. The components of the present invention can be positioned in a number of different orientations. As such, the directional terminology is used for purposes of illustration and is in no way limiting. On the other hand, the drawings are only schematic and the sizes of components may be exaggerated for clarity. It is to be understood that other embodiments may be utilized and structural changes may be made without departing from the scope of the present invention. Also, it is to be understood that the phraseology and terminology used herein are for the purpose of description and should not be regarded as limiting. The use of "including," "comprising," or "having" and variations thereof herein is meant to encompass the items listed thereafter and equivalents thereof as well as additional items. Unless limited otherwise, the terms "connected," "coupled," and "mounted" and variations thereof herein are used broadly and encompass direct and indirect connections, couplings, and mountings. Similarly, the terms "facing," "faces" and variations thereof herein are used broadly and encompass direct and indirect facing, and "adjacent to" and variations thereof herein are used broadly and encompass directly and indirectly "adjacent to". Therefore, the description of "A" component facing "B" component herein may contain the situations that "A" component directly faces "B" component or one or more additional components are between "A" component and "B" component. Also, the description of "A" component "adjacent to" "B" component herein may contain the situations that "A" component is directly "adjacent to" "B" component or one or more additional components are between "A" component and "B" component. Accordingly, the drawings and descriptions will be regarded as illustrative in nature and not as restrictive.

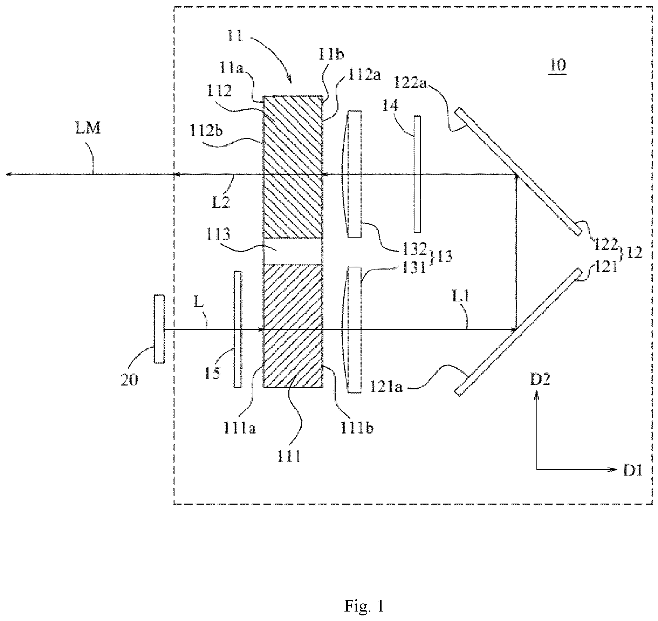

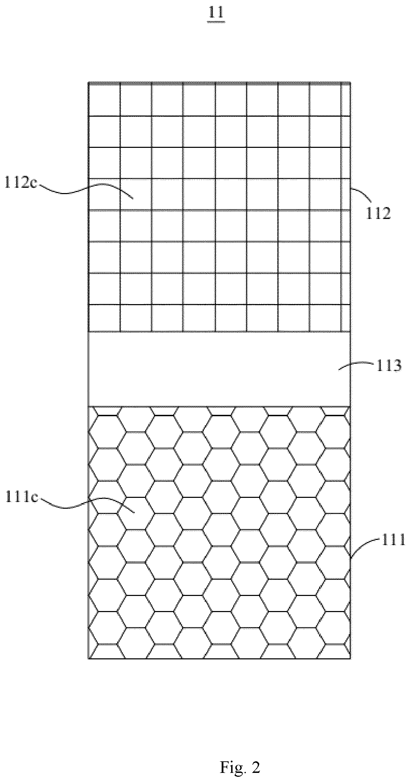

Referring to Figs. 1 and 2, a light uniformization system 10 shown in Fig. 1 includes a lens array element 11 including a first array region 111, a second array region 112 and a connecting region 113. Light beams L generated by a light source module 20 enter the light uniformization system 10 along a first direction D1 and exit the light uniformization system 10 along a direction parallel to the first direction D1 to become uniformized light beams LM. The first array region 111, the second array region 112 and the connecting region 113 of the lens array element 11 are arranged along a second direction D2 perpendicular to the first direction D1.

The lens array element 11 of the present embodiment is integrally structured. The opposite ends of the connecting region 113 are connected to the first array region 111 and the second array region 112 respectively, whereby the connecting region 113 is located between the first array region 111 and the second array region 112 in the second direction D2. The lens array element 11 is rectangular, wherein the first array region 111 and the second array region 112 are disposed at opposite ends thereof, and the connecting region 113 is disposed in the middle.

The first lens array region 111 has a first light incident surface 111a, a first light exiting surface 111b opposite to the first light incident surface 111a and a plurality of first micro lenses 111c. The first micro lenses 111c are disposed on the first light incident surface 111a and the first light exiting surface 111b respectively, or the first micro lenses 111c are disposed on one of the first light incident surface 111a and the first light exiting surface 111b. The first micro lenses 111c are hexagonal or square in shape, but they are not limited thereto. The second array region 112 has a second light incident surface 112a, a second light exiting surface 112b and a plurality of second micro lenses 112c. The second micro lenses 112c are disposed on the second light incident surface 112a and the second light exiting surface 112b respectively, or the second micro lenses 112c are disposed on one of the second light incident surface 112a and the second light exiting surface 112b. The second micro lenses are hexagonal or square in shape, but they are not limited thereto.

The first light incident surface 111a and the second light exiting surface 112b are on the same surface, a first surface 11a, of the lens array element 11. The first light exiting surface 111b and the second light incident surface 112a are on the same surface, a second surface 11b, of the lane array element 11. The first surface 11a and the second surface 11b are oppositely disposed and orthogonal to the first direction D1.

When the light source module 20 generates the light beams L, the light beams L enter the first array region 111 through the first light incident surface 111a and pass through at least a portion of the first micro lenses 111c, and afterwards the light beams exit the first array region 111 through the first light exiting surface 111b to form first light beams L1. The first micro lenses 111c uniformize the light beams L to eliminate speckles of the light beams from the light source module 20. The first light beams are primarily uniformized light beams. Afterwards, the first light beams L1 enter the second array region 112 and pass through at least a portion of the second micro lenses 112c before the first light beams L1 exit the second array region 112 through the second light exiting surface 112b along a direction opposite to the first direction D1 to form second light beams L2.

In at least one embodiment, the second light beams L2 exit the second array region 112 from the second light exiting surface 112b and leave the light uniformization system 10 to become the uniformized light beams LM. In other words, the second array region 112 here is utilized to adjust the angle distribution of the first light beams L1 to obtain the second light beams L2 (or the uniformized light beams LM) meeting design requirements. In this way, the exiting direction of the first light beams L1 from the first lens array region 111 and the exiting direction of the second light beams L2 from the second lens array region 112 are opposite and parallel to each other, both being parallel to the first direction D1.

As the lens array element 11 is integrally structured, the first array region 111 and the second array region 112 are formed by the same material. Moreover, the first array region 111 and the second array region 112 are substantially the same in thickness. Since the light beams L enter the first array region 111 along a direction perpendicular to the first light incident surface 111a and the first light beams L1 enter the second array region 112 along a direction perpendicular to the second light incident surface 112a, a distance of the light beams L propagating in the first array region 111 is equal to a distance of the first beams L1 propagating in the second array region 112. The light beams L from the light source module 20 pass through the light uniformization system 10 to be uniformized by the first array region 111 and the second array region 112, and finally the uniformized light beams LM having a two-dimensional light field are formed.

In at least one embodiment, the light uniformization system 10 further includes a first optical path folding unit 12 configured to change a transmission direction of the first light beams L1. The first optical path folding unit 12 is disposed in an optical path between the first light exiting surface 111b and the second light incident surface 112a. After the first light beams L1 exit the first light exiting surface 111b, the first light beams L1 enter the first optical path folding unit 12 along the first direction D1 and leave the first optical path folding unit 12 along a first transmission direction, wherein the first direction D1 and the first transmission direction are opposite and parallel to each other, whereby the optical path of the first light beams L1 between the first light exiting surface 111b and the second light incident surface 112a is U-shaped.

In at least one embodiment, the light uniformization system 10 further includes a first light condensing unit 13 disposed in the optical path between the first light exiting surface 111b and the second light incident surface 112a to converge the first light beams L1. Specifically, the first light condensing unit 13 includes a first condensing lens 131 and a second condensing lens 132. The first optical path folding unit 12 includes a first reflecting mirror 121 and a second reflecting mirror 122. The first condensing lens 131 is disposed between the first array region 111 and the first reflecting mirror 121. The second condensing lens 132 is disposed between the second reflecting mirror 122 and the second array region 112. In at least one embodiment, the first reflecting mirror 121 has a reflecting surface121a, and the second reflecting mirror 122 has a reflecting surface122a. The t reflecting surface 121a is arranged at an angle of 45 degree with the reflecting surface 122a . The reflecting surface122a of the second reflecting mirror 122 is arranged at an angle of 45° with respect to the first light exiting surface 111b and also at an angle of 45° with respect to the second light incident surface 112a, but it is not limited thereto. After the first light beams L1 exit the first light exiting surface 111b, the first light beams L1 converge by the first light condensing lens 131 and propagate to the first reflecting mirror 121 of the first optical path folding unit 12 along the first direction D1. The reflecting surface121a of the first reflecting mirror 121 reflects the first light beams L1, and the reflected first light beams L1 are transmitted along the second direction D2 to the second reflecting mirror 122. The first light beams L1 propagate along the first transmission direction to leave the second reflecting mirror 122 and pass through the second condensing lens 132 and the second array region 112 sequentially.

In at least one embodiment, the light uniformization system 10 further includes a first light diffusing element 14 disposed between the second reflecting mirror 122 and the second array region 112, and the first light beams L1 pass through the first light diffusing element 14 to be diffused thereby before the first light beams L1 are incident to the second light incident surface 112a.

In at least one embodiment, the light uniformization system 10 further includes a second light diffusing element 15 disposed in front of the first light incident surface 111a of the first array region 111 along the first direction D1, and the light beams L pass through the second light diffusing element 15 for initial diffusion before the light beams L are incident to the first light incident surface 111a.

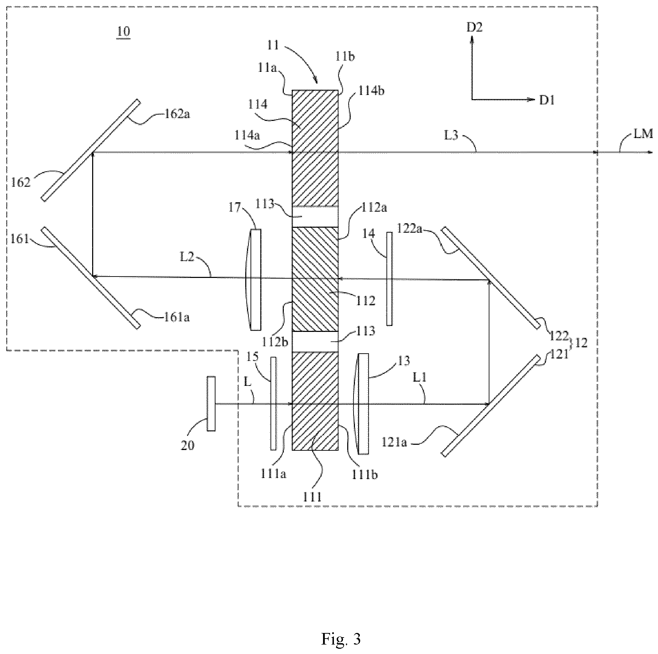

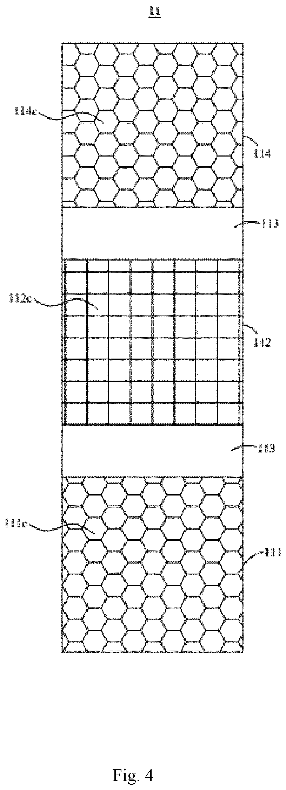

Referring to Figs. 3 and 4, another embodiment of the light uniformization system is disclosed. The present embodiment has a portion of the structures identical to the structures of the previous embodiment, and the identical components are given the same numerical identifiers, so descriptions thereof are thus omitted. The lens array element 11 of the uniformization system 10 of the present embodiment further includes a third array region 114, wherein the first array region 111, the second array region 112 and the third array region 114 are connected to form the lens array element 11 and arranged along the second direction D2. The second array region 112 is located between the first array region 111 and the third array region 114. The lens array element 11 of the present embodiment has two connecting regions 113. One of the connecting regions 113 connects the first array region 111 and the second array region 112, and the other connecting region 113 connects the second array region 112 and the third array region 114.

The third array region 114 has a third light incident surface 114a, a third light exiting surface 114b and a plurality of third micro lenses 114c. The third micro lenses 114c are disposed on the third light incident surface 114a and the third light exiting surface 114b respectively, or the third micro lenses 114c are disposed on one of the third light incident surface 114a and the third light exiting surface 114b. The third micro lenses 114c are hexagonal or square in shape, but they are not limited thereto. The first light incident surface 111a, the second light exiting surface 112b and the third light incident surface 114a are located on the same surface, that is, the first surface 11a of the lens array element 11, and the first light exiting surface 111b, the second light incident surface 112a and the third light exiting surface 112a and the third light exiting surface 114b are on the same surface, that is, the second surface 11b of the lens array element 11.

The second light beams L2 exiting the second light exiting surface 112b enter the third array region 114 through the third light incident surface 114a. After the second light beams L2 pass through at least a portion of the third micro lenses 114c, the second light beams L2 exit the lens array element 11 through the third light exiting surface 114b to form third light beams L3. The third light beams L3 of the present embodiment leave the light uniformization system 10 to form uniformized light beams LM. A exiting direction of the third light beams L3 is parallel to and the same as that of the first light beams L1, both being parallel to the first direction D1.

In at least one embodiment, the light uniformization system 10 further includes a second optical path folding unit 16 disposed in an optical path of the second light beams L2 between the second light exiting surface 112b and the third light incident surface 114a to change the transmission direction of the second light beams L2. After the second light beams L2 exit the second light exiting surface 112b, the second light beams L2 enter the second optical path folding unit 16 along the first transmission direction and leave the second optical path folding unit 16 along first direction D1. The first transmission direction is opposite to and parallel to the first direction D1, whereby the optical path of the second light beams L2 between the second light exiting surface 112b and the third light incident surface 114a is U-shaped. Therefore, the whole optical path of the light uniformization system 10 of the present embodiment is S-shaped.

Specifically, the second optical path folding unit 16 includes a third reflecting mirror 161 having a reflecting surface161a and a fourth reflecting mirror 162 having a reflecting surface161b. The reflecting surface 161a is arranged at an angle of 45 degree with the reflecting surface 162a. The reflecting surface161a is arranged at an angle of 45° with respect to the second light exiting surface 112b and also at an angle of 45° with respect to the third light exiting surface 114a, but it is not limited thereto. The second light beams L2 leave the second array region 112 through the second light exiting surface 112b and propagate to the third reflecting mirror 161 along the first transmission direction. The reflecting surface161a reflects the second light beams L2 to propagate to the fourth reflecting mirror 162 along the second direction D2. The reflecting surface162a of the fourth reflecting mirror 162 reflects the second light beams L2 to enter the third array region 114 along the first direction.

The light condensing unit 13 of the present embodiment is a single condensing lens disposed in an optical path of the first laser light beams L1 between the first light exiting surface 111b and the first reflecting mirror 121. In other embodiments, the light condensing unit13 is disposed in an optical path of the first laser light beams L1 between the second reflecting mirror 122 and the second light incident surface 112a. Otherwise, as in the previous embodiment and as shown in Fig. 1, the light condensing unit 13 including the first condensing lens 131 and the second condensing lens 132 is utilized. However, it is not limited thereto.

In at least one embodiment, the light uniformization system 10 further includes a second light condensing element 17 disposed in an optical path of the second light beams L2 between the second light exiting surface 112b and the third light incident surface 114a to converge the second light beams L2.

As aforementioned, the lens array element of the light uniformization system of the present invention is not limited to two array regions or three array regions. In other embodiments, the lens array element may include four or more than four array regions.

The integrally-structured lens array element can be manufactured with a single mold, and alignment and calibration are inherently accomplished by the manufacturing process meeting the design requirements. As no assembly process is needed for the integrally-structured lens array element, the manufacturing cost is lowered and the manufacturing process is simplified. The integrally-structured lens array element has fewer components, thereby reducing the size of the light engine.

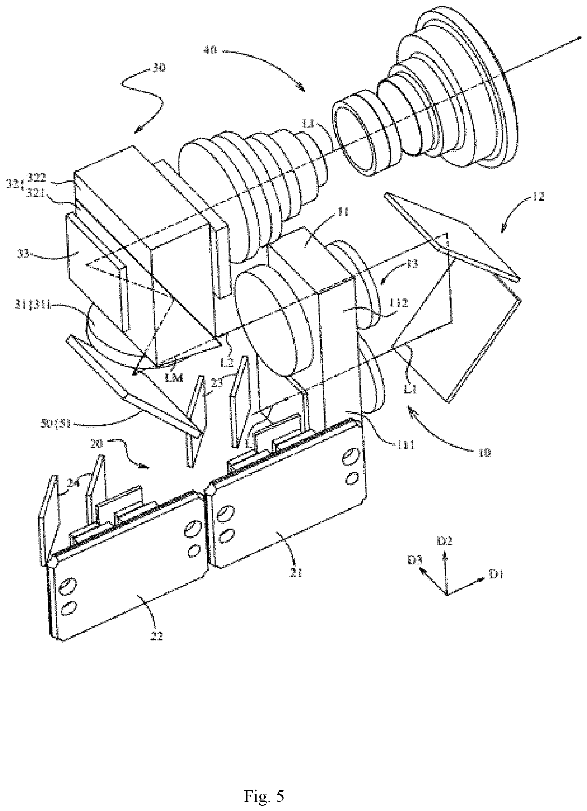

Referring to Figs. 5, 6 and 7, an embodiment of a projection apparatus is disclosed. The projection apparatus of the present embodiment includes the light uniformization system 10, a light source module 20, a light modulation module 30 and a projecting lens 40.

The light source module 20 emits the light beams L. The light uniformization system 10 is disposed in the optical path of the light beams L. The light beams L are incident to the light array element 11 through the first light incident surface 111a of the first array region 111 and uniformized several times in the light uniformization system 10 to obtain the uniformized light beams LM. The light modulation module 30 disposed in the optical path of the uniformized light beams LM (the illumination light) receives the uniformized light beams LM and converts the uniformized light beams LM into image light LI. The projecting lens 40 disposed in an optical path of the image light LI projects the image light LI onto a screen.

The light source module 20 includes at least one light emitting element. The light emitting element is a light emitting diode or a laser diode, and the number of the light emitting diodes or laser diodes is single or multiple. When the number of the light emitting diodes (or the laser diodes) is multiple, the multiple light emitting diodes can be arranged as an array. In one embodiment, each light emitting element includes at least one light emitting diode (or laser diode) emitting monochromatic light, such as a laser light source array composed of one or multiple light emitting diodes (or laser diodes) emitting blue light, a laser light source array composed of one or multiple light emitting diodes (or laser diodes) emitting red light, or a laser light source array composed of one or multiple light emitting diodes (or laser diodes) emitting green light. The light emitting element may utilize a Quslas light source or an Octolas light source, but it is not limited thereto. In other embodiments, the light beams emitted from the light emitting elements are combined by a light combination element, and afterwards the combined light beams enter the light uniformization system 10. The light source module 20 of the present embodiment includes a plurality of light emitting elements 21 and 22 emitting light beams of different colors and a plurality of light combination elements 23 and 24 combining the light beams emitted by the light emitting elements 21 and 22 and conducting the light beams to enter the light uniformization system 10 along the first direction D1. In the present embodiment, the light beams emitted by the light emitting elements 21 and 22 travel along a third direction D3 to enter the light combination elements 23 and 24. The light combination elements 23 and 24 combine the light beams and conduct the light beams to enter the light uniformization system 10 along the first direction D1 perpendicular to the third direction D3. Therefore, all the light beams of different colors from the light source module 20 enter the light uniformization system 10 along the first direction D1. Moreover, the light uniformization system 10 for eliminating the speckles of the light beams L can be any one of the aforementioned light uniformization systems 10, but it is not limited thereto.

The light modulation module 30 includes an optical element 31, a prism element 32 and at least one light modulation element 33. The uniformized light beams LM pass through the optical element 31, the prism element 32 and are incident on at least one light modulation element 33 sequentially. The light modulation element 33 converts the uniformized light beams LM to image light LI, and the image light LI propagates to the projecting lens 40. The light modulation element 33 can be digital micromirror device (DMD), liquid crystal on silicon (LCoS) or liquid crystal display (LCD), but it is not limited thereto. Moreover, the number of the light modulation elements 33 is also not limited. For example, the projection apparatus can utilize one digital micromirror device or three digital micromirror devices.

In at least one embodiment, the optical element 31 includes a third condensing lens 311 configured to converge the uniformized light beams LM. The prism element 32 includes a first prism 321 and a second prism 322. The uniformized light beams LM are totally reflected on an interface between the first prism 321 and the second prism 322 and afterwards incident to the light modulation module 33 for converting the uniformized light beams LM into image light LI. The image light LI pass through the first prism 321 and the second prism 322 and enter the projecting lens 40 along the first direction D1. The projecting lens 40 projects the image light LI onto a screen.

The projecting lens 40 includes one or multiple optical lenses provided with identical or different diopters. For example, the optical lens can be a non-planar lens, such as a biconvex lens, biconcave lens, concave-convex lens, convex-concave lens, plane-convex lens or plane-concave lens, or any combination of such lenses. On the other hand, the projecting lens 40 can also include a planar optical lens. The structure of the projecting lens 40 is not limited in the present invention.

In at least one embodiment, the projection apparatus further includes a third optical path folding unit 50. The third optical path folding unit 50 includes a fifth reflecting mirror 51 disposed in an optical path of the uniformized light beams LM to conduct the uniformized light beams LM to the optical element 31 of the light modulation module 30.

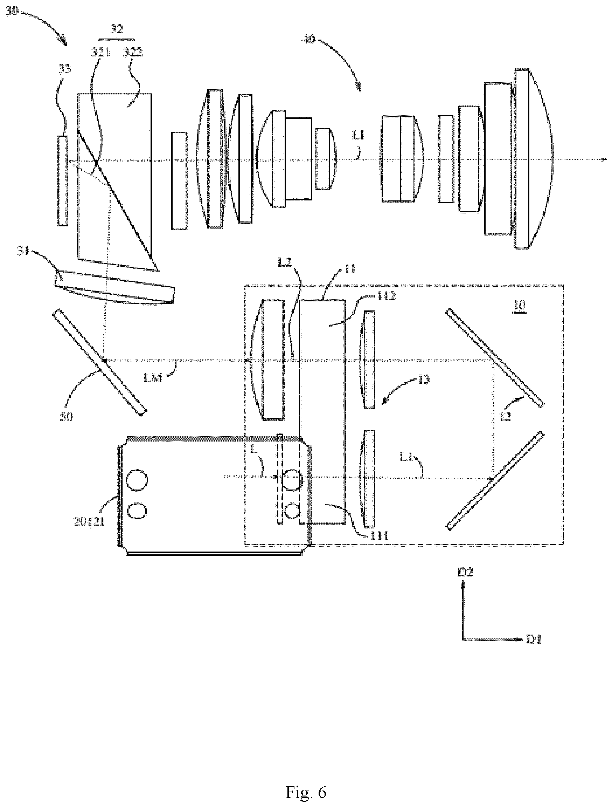

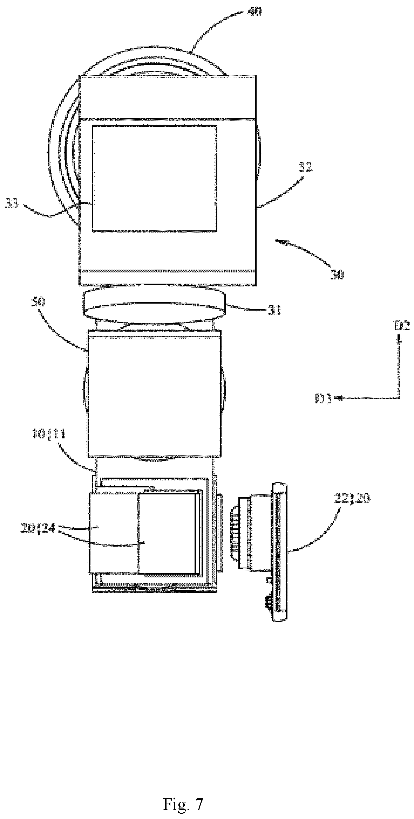

In the present embodiment, a first plane is defined by the first direction D1 and the second direction D2. Fig. 6 illustrates the projection apparatus of Fig. 5 viewed in a direction perpendicular to the first plane, and Fig. 7 illustrates the projection apparatus of Fig. 5 viewed in a direction parallel to the first plane. The light uniformization system 10, the light source module 20, the light modulation element 30, the projecting lens 40 and the third optical path folding unit 50 are all disposed on the first plane, and orthographic projections of the uniformization system 10, the light modulation element 30, the projecting lens 40 and the third optical path folding unit 50 on the first plane do not overlap. A third direction D3 perpendicular to the first plane is defined. An orthographic projection of the second light exiting surface 112b of the second array region 112 of the lens array element 11 on a second plane defined by the second direction D2 and the third direction D3 is located between orthographic projections of the first light incident surface 111a of the first array region 111 and the light exiting plane of the projecting lens 40 on the second plane. In the present embodiment, the optical paths of the light beams L, the first light beams L1, the second light beams L2 and the uniformized light beams LM are on the first plane, and the optical paths of the uniformized light beams LM and the image light LI are also on the first plane.

In at least one embodiment, the second direction is parallel to the direction of gravity, and the first plane is a vertical plane orthogonal to the horizontal plane. Therefore, a light incident position of the light beams L in the light uniformization system 10 (or the orthographic projection of the first light incident surface 111a), a light exiting position of the uniformized light beams LM in the light uniformization system 10 (or the orthographic projection of the second light exiting surface 112b) and a light exiting position of the image light beams LI in the projecting lens 40 are arranged along a vertical direction. For example, the light incident position of the light beams L in the light uniformization system 10 is located at the bottommost position. The light exiting position of the uniformized light beams LM in the light uniformization system 10 is above the light incident position of the light beams L in the light uniformization system 10. The light exiting position of the image light beams LI in the projecting lens 40 is located at the topmost position. In such a structure, the projection apparatus has a reduced size and thus a compact erect appearance.

However, in other embodiments, the third direction D3 is parallel to the direction of gravity, and the first direction D1 and the second direction D2 are perpendicular to the direction of gravity. The first plane is a horizonal plane. Therefore, the light incident position of the light beams L in the light uniformization system 10, the light exiting position of the uniformized light beams LM in the light uniformization system 10 and the light exiting position of the image light beams LI in the projecting lens 40 are arranged along the horizontal direction. For example, the light incident position of the light beams L in the light uniformization system 10 is at the rightmost position, the light exiting position of the uniformized light beams LM in the light uniformization system 10 is in the center, and the light exiting position of the image light beams LI in the projecting lens 40 is at the leftmost position. In such a structure, the projection apparatus has a reduced size and thus the appearance of lying flat.

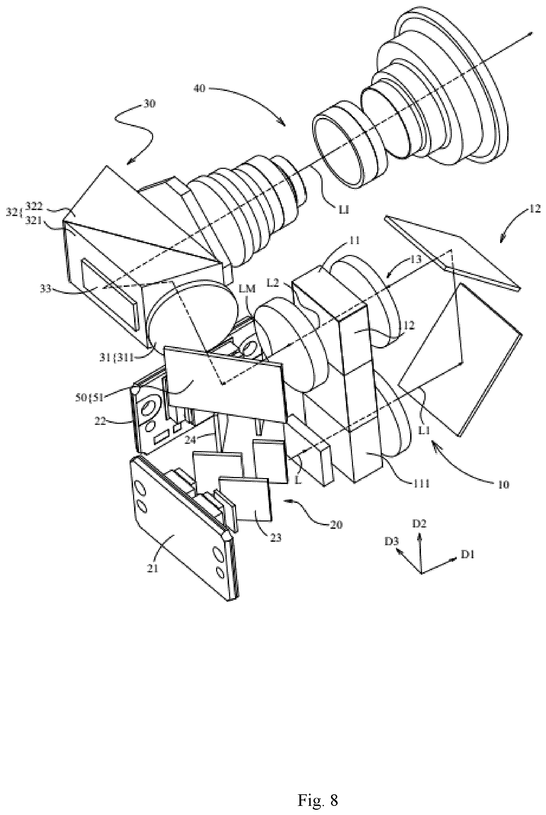

Referring to Figs. 8, 9, 10 and 11, another embodiment of a projection apparatus is disclosed. The present embodiment has a portion of the structures identical to the structures of the previous embodiment, and the identical components are given the same numerical identifiers, so descriptions thereof are thus omitted.

In the present embodiment, the light emitting element 21 is disposed at a line extending along the first direction D1 with respect to the light uniformization system 10, and the light emitting element 22 is disposed at a line extending along the third direction D3 with respect to the light uniformization system 10. The light emitting element 21 emits light beams of different colors into the light combination element 23 along the first direction D1 for combination therein, and the combined light beams enter the light uniformization system 10. The light emitting element 22 emits light beams of different colors into the light combination element 24 along the third direction D3 for combination therein, and the transmission direction of the combined light beams is changed by the light combination element 24 to enter the light uniformization system 10.

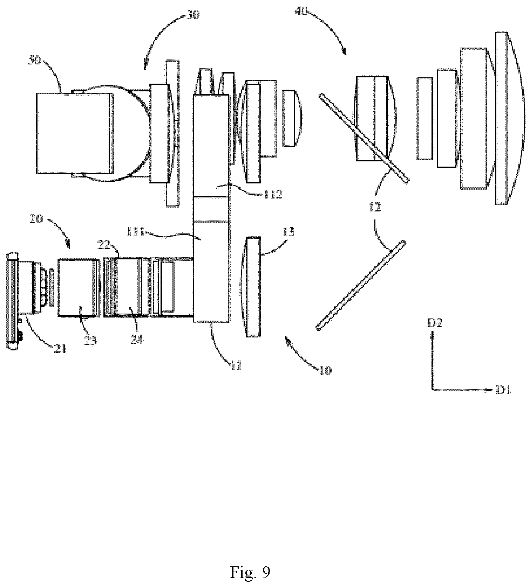

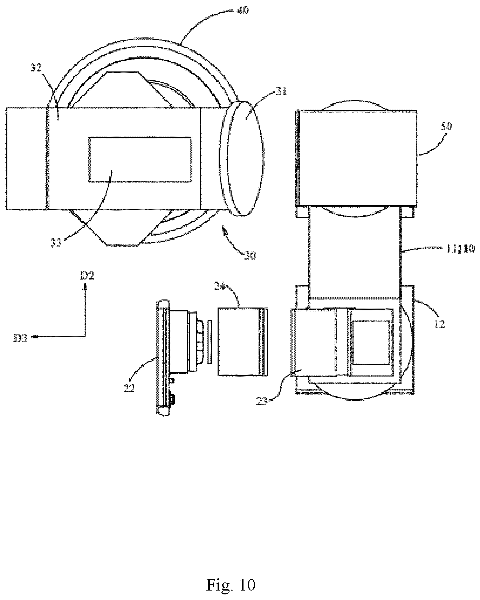

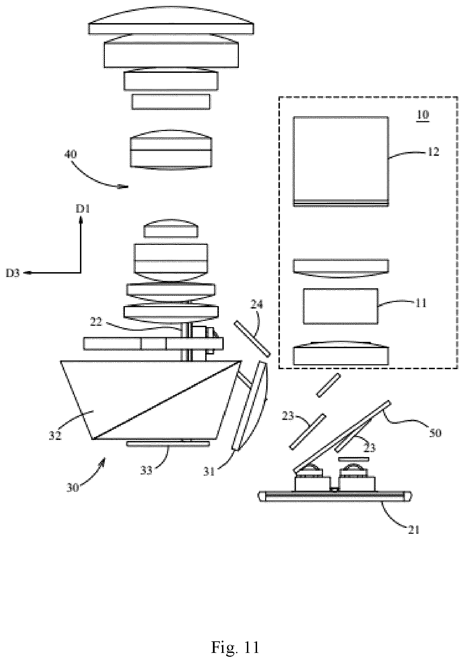

The fifth reflecting mirror 51 of the third optical path folding unit 50 in the present embodiment folds the optical path of the uniformized light beams LM, whereby the uniformized light beams LM enter the light modulation module 30 along the third direction D3 and finally exit the projection apparatus from the projecting lens 40. The third direction D3 is perpendicular to the first direction D1 and the second direction D2, wherein the second direction D2 and the third direction D3 define a second plane, and the first direction D1 and the third direction D3 define a third plane. Therefore, the first plane, the second plane and the third plane are orthogonal. Fig. 9 illustrates the projection apparatus of Fig. 8 viewed along a direction orthogonal to the first plane, Fig. 10 illustrates the projection apparatus of Fig. 8 viewed along a direction orthogonal to the second plane, and Fig. 11 illustrates the projection apparatus of Fig. 8 viewed along a direction orthogonal to the third plane. In the projection apparatus of the present embodiment, the optical path from the light beams L entering the light uniformization system 10 along the first direction D1 to the optical path of the uniformized light beams LM exiting the light uniformization system 10 is located on the first plane defined by the first direction D1 and the second direction D2. The optical path from the light beams LM exiting the light uniformization system 10 to the optical path of the image light s LI is located on the third plane defined by the first direction D1 and the third direction D3.

As shown in Fig. 9, the light uniformization system 10 and the light source module 20 are disposed on the first plane, and the orthographic projections of the light uniformization system 10 and the light source module 20 on the first plane do not overlap. The orthographic projections of the second array region 112 of the lens array element 11 of the light uniformization system 10 and the projecting lens 40 on the first plane at least partially overlap.

As shown in Fig. 10, the orthographic projections of the second light exiting surface 112b of the second array region 112 of the lens array element 11 and the light exiting surface of the projecting lens 40 on the second plane are arranged along the third direction D3. The orthographic projections of the second light exiting surface 112b of the second array region 112 of the lens array element 11 and the first light incident surface 111a of the first array region 111 are arranged along the second direction D2.

As shown in Fig. 11, the light modulation module 30 and the projecting lens 40 are disposed on the third plane, and the orthographic projections of the light modulation module 30 and the projecting lens 40 on the third plane do not overlap.

In the embodiments illustrated in Figs. 8 to 11, the second direction D2 is parallel to the direction of gravity, while the first direction D1 and the third direction D3 are perpendicular to the direction of gravity. The first plane is a vertical plane and orthogonal to the horizontal plane. Therefore, on the second plane defined by the second direction D2 and the third direction D3, the light incident position of the light beams L in the light uniformization system 10 (or an orthographic projection of the first light incident surface 111a) and a light exiting position of the uniformized light beams LM in the light uniformization system 10 are arranged along the vertical direction, and the light exiting position of the uniformized light beams LM in the light uniformization system 10 and the light exiting position of the image light beams LI in the projecting lens 40 are arranged in the horizontal direction. For example, the light incident position of the light beams L in the light uniformization system 10 is located at the bottommost position, the light exiting position of the uniformized light beams LM in the light uniformization system 10 are above the light incident position of the light beams L in the light uniformization system 10, and the light exiting position of the image light beams LI in the projecting lens 40 is on the left side of the light exiting position of the uniformized light beams LM in the light uniformization system 10.

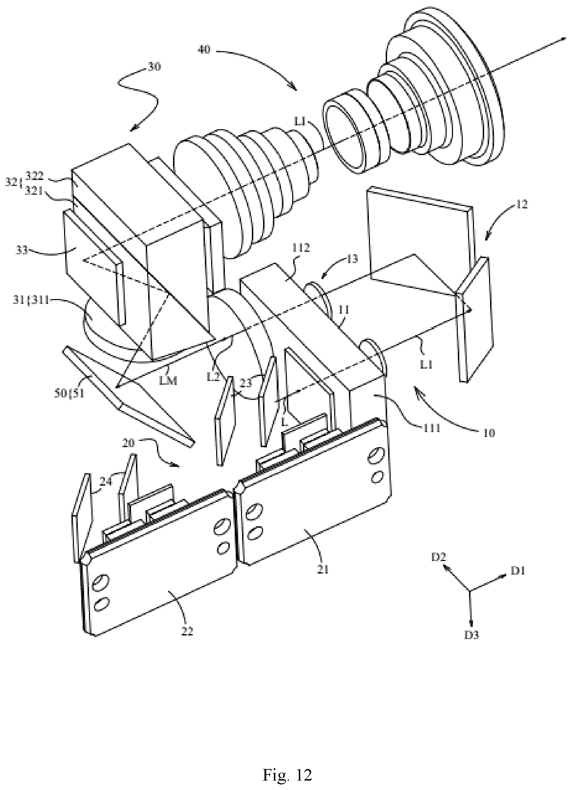

Referring to Fig. 12, another embodiment of a projection apparatus is disclosed. The present embodiment has a portion of the structures identical to the structures of the previous embodiment, and the identical components are given the same numerical identifiers, so descriptions thereof are thus omitted.

In the present embodiment, the light beams of different colors emitted by the light emitting elements 21, 22 enter the light combination elements 23 and 24. The light combination elements 23 and 24 combine the light beams and change the transmission direction of the light beams to enter the light uniformization system 10 along the first direction D1, wherein the third direction D3 is parallel to the direction of gravity, and the first direction D1 and the second direction D2 are perpendicular to the direction of gravity. The first plane is a horizontal plane.

Therefore, on the second plane defined by the second direction D2 and the third direction D3, the light incident position of the light beams L in the light uniformization system 10 (or an orthographic projection of the first light incident surface 111a) and a light exiting position of the uniformized light beams LM in the light uniformization system 10 are arranged along the horizontal direction, and the light exiting position of the uniformized light beams LM in the light uniformization system 10 and the light exiting position of the image light beams LI in the projecting lens 40 are arranged in the vertical direction. For example, the light incident position of the light beams L in the light uniformization system 10 is located at the rightmost position, the light exiting position of the uniformized light beams LM in the light uniformization system 10 is on the left side of the light incident position of the light beams L in the light uniformization system 10, and the light exiting position of the image light beams LI in the projecting lens 40 is above the light exiting position of the uniformized light beams LM in the light uniformization system 10.

As aforementioned, the light uniformization system and the projection apparatus utilizing the same have at least one of the following advantageous effects. The integrally-structured lens array element can be manufactured with a single mold, and alignment and calibration are inherently accomplished by the manufacturing process meeting the design requirements. As no assembly process is needed for the integrally-structured lens array element, the manufacture cost is lowered and the manufacturing process is simplified. The integrally-structured lens array element has fewer components, thereby reducing the size of the light engine. Moreover, the present invention utilizes the static lens array element to eliminate speckles of light spots of the light beams, and the number of movable diffusing elements is also reduced, thereby promoting reliability and the user experience.

The foregoing description of the preferred embodiments of the invention has been presented for purposes of illustration and description. It is not intended to be exhaustive or to limit the invention to the precise form or to exemplary embodiments disclosed. Accordingly, the foregoing description should be regarded as illustrative rather than restrictive. Obviously, many modifications and variations will be apparent to practitioners skilled in this art. The embodiments are chosen and described in order to best explain the principles of the invention and its best mode of practical application, thereby to enable persons skilled in the art to understand the invention in various embodiments and with various modifications as are suited to the particular use or implementation contemplated. It is intended that the scope of the invention be defined by the claims appended hereto and their equivalents, in which all terms are meant in their broadest reasonable sense unless otherwise indicated. Therefore, the term "the invention", "the present invention" or the like does not necessarily limit the claim scope to a specific embodiment, and the reference to particularly preferred exemplary embodiments of the invention does not imply a limitation on the invention, and no such limitation is to be inferred. The invention is limited only by the scope of the appended claims. Moreover, these claims may refer to or use "first", "second", etc. for a noun or element. Such terms should be understood as a nomenclature and should not be construed as giving the limitation on the number of the elements modified by such nomenclature unless a specific number has been given. The abstract of the disclosure is provided to comply with the rules requiring an abstract, which will allow a searcher to quickly ascertain the subject matter of the technical disclosure of any patent issued from this disclosure.

## Claims

1. A light uniformization system (10) for uniformizing light beams (L) from a light source module (20), the light beams (L) entering the light uniformization system (10) along a first direction (D1) and exiting the light uniformization system (10) along a direction parallel to the first direction (D1) to form uniformized light beams (LM), comprising:
a lens array element (11) comprising a first array region (111) and a second array region (112) connected to each other and arranged along a second direction (D2),
wherein the first array region (111) comprises a first light incident surface (111a), a first light exiting surface (111b) and a plurality of first micro lenses (111c), and the light beams (L) enter the first array region (111) through the first light incident surface (111a) along the first direction (D1), pass through the first micro lenses (111c) and exit the first array region (111) through the first light exiting surface (111b) to form first light beams (L1),
wherein the second array region (112) comprises a second light incident surface (112a), a second light exiting surface (112b) and a plurality of second micro lenses (112c), and the first light beams (L1) enter the second array region (112) through the second light incident surface (112a), pass through the second micro lenses (112c) and exit the second array region (112) through the second light exiting surface (112b) to form second light beams (L2);
wherein the first light incident surface (111a) and the second light exiting surface (112b) are located at a same surface of the lens array element (11), and the first direction (D1) is perpendicular to the second direction (D2).

2. The light uniformization system as claimed in claim 1, wherein the second light beams (L2) exit the second array region (112) through the second light exiting surface (112b) and leave the light uniformization system (10) to form the uniformized light beams (LM); a light exiting direction of the first light beams (L1) from the first lens array region (111) and a light exiting direction of the second light beams (L2) from the second lens array region (112) are opposite and both parallel to the first direction (D1).

3. The light uniformization system as claimed in claim 1 or 2, wherein the lens array element (11) further comprises a connecting region (113) located between the first array region (111) and the second array region (112) in the second direction (D2) and connecting the first array region (111) and the second array region (112), preferably the light beams (L1, L2) do not pass through the connecting region (113).

4. The light uniformization system as claimed in any one of the preceding claims, wherein a distance of the light beams (L) propagating in the first array region (111) is the same as a distance of the first light beams (L1) propagating in the second array region (112).

5. The light uniformization system as claimed in any one of the preceding claims, further comprising a first optical path folding unit (12) disposed in an optical path of the first light beams (L1) between the first light exiting surface (111b) and the second light incident surface (112a) to change a transmission direction of the first light beams (L1), wherein the first light beams (L1) enter the first optical path folding unit (12) along the first direction and exit the first optical path folding unit (12) along a first transmission direction and the first transmission direction is opposite to and parallel to the first direction (D1), preferably the optical path of the first light beams (L1) between the first light exiting surface (111b) and the second light incident surface (112a) is U-shaped.

6. The light uniformization system as claimed in any one of the preceding claims, further comprising a first light condensing unit (13) disposed between the first light exiting surface (111b) and the second light incident surface (112a) to converge the first light beams (L1).

7. The light uniformization system as claimed in claim 6, wherein the first light condensing unit (13) comprises a first condensing lens (131) and a second condensing lens (132), the first optical path folding unit (12) comprises a first reflecting mirror (121) and a second reflecting mirror (122), and the first condensing lens (131) is disposed between the first array region (111) and the first reflecting mirror (121), and the second condensing lens (132) is disposed between the second reflecting mirror (122) and the second array region (112),
wherein the first light beams (L1) converged by the first condensing lens (131) propagate to the first reflecting mirror (121) of the first optical path folding unit (12), which enables the first light beams (L1) to propagate to the second reflecting mirror (122) along the second direction (D2), which changes a transmission direction of the first light beams (L1), whereby the first light beams (L1) leave the second reflecting mirror (122) along the first transmission direction and pass through the second condensing lens (132) and the second array region (122) sequentially.

8. The light uniformization system as claimed in any one of the preceding claims 5-7, further comprising a first light diffusing element (14) disposed between the first optical path folding unit (12) and the second array region (112), wherein the first light beams (L1) passing through the first light diffusing element (14) are incident to the second light incident surface (112a).

9. The light uniformization system as claimed in any one of the preceding claims, further comprising a second light diffusing element (15) disposed in front of the first light incident surface (111a), wherein the light beams (L) pass through second light diffusing element (15) before the light beams (L) are incident to the first light incident surface (111a).

10. The light uniformization system as claimed in any one of the preceding claims, wherein the lens array element (11) further comprises a third array region (114) comprising a third light incident surface (114a), a third light exiting surface (114b) and a plurality of third micro lenses (114c); the first array region (111), the second array region (112) and the third array region (114) are arranged along the second direction (D2) sequentially; the second array region (112) is located between the first array region (111) and the third array region (114), and the second array region (112) connects with the first array region (111) and the third array region (114); and the second light beams (L2) enter the third array region (114) through the third light incident surface (114a), pass through the third micro lenses (114c) and exit the third array region (114) through the third light exiting surface (114c) along the first direction (D1) to form third light beams (L3);
wherein the first light incident surface (111a), the second light exiting surface (112b) and the third light incident surface (114a) are located on a same surface of the lens array element (11).

11. The light uniformization system as claimed in claim 10, wherein the third light beams (L3) exit the third light exiting surface (114b) and leave the light uniformization system (10) to form the uniformized light beams (LM), and the third light beams (L3) and the first light beams (L1) exit the lens array element (11) along the first direction (D1).

12. The light uniformization system as claimed in claim 10 or 11, further comprising a second optical path folding unit (16) disposed in an optical path between the second light exiting surface (112b) and the third light incident surface (114a) to change a transmission direction of the second light beams (L2),
wherein the second light beams (L2) enter the second optical path folding unit (16) along the first transmission direction parallel to the first direction (D1) and leave the second optical path folding unit (16) along the first direction opposite and parallel to the first transmission direction, whereby the optical path of the second light beams (L2) between the second light exiting surface (112b) and the third light incident surface (114a) is U-shaped.

13. The light uniformization system as claimed in claim 10, 11 or 12, further comprising a second light condensing element (17) disposed on the optical path of the second light beams (L2) between the second light exiting surface (112b) and the third light incident surface (114a) to converge the second light beams (L2).

14. The light uniformization system as claimed in claim 12, wherein the second optical path folding unit (16) comprises a third reflecting mirror (161) and a fourth reflecting mirror (162), wherein the second light beams (L2) exit the second array region (112) from the second light exiting surface (112b) and propagate to the third reflecting mirror (161) along the first transmission direction, which enables the second light beams (L2) to propagate to the fourth reflecting mirror (162), where a transmission direction of the second light beams (L2) is changed, whereby the second light beams (L2) exit the fourth reflecting mirror (162) before the second light beams (L2) enter the third array region (114).

15. A projection apparatus, comprising:
a light source module (2) configured to emit light beams (L);
the light uniformization system (10) as claimed in any one of the preceding claims disposed in an optical path of the light beams (L), wherein the light beams (L) are incident to the lens array element (11) through the first light incident surface (111a) of the first array region (111) and uniformized several times in the light uniformization system (10), and the light beams (L2) exit the light uniformization system (10) to form uniformized light beams (LM);
a light modulation module (30) disposed in an optical path of the uniformized light beams (LM) and configured to receive the uniformized light beams (LM) and convert the uniformized light beams (LM) to image light (LI);
a projecting (40) lens disposed in an optical path of the image light (LI) and configured to project the image light (LI).

## Patentansprüche

1. Lichtvereinheitlichungssystem (10) zum Vereinheitlichen von Lichtstrahlen (L) von einem Lichtquellenmodul (20), wobei die Lichtstrahlen (L) in das Lichtvereinheitlichungssystem (10) entlang einer ersten Richtung (D1) eintreten und aus dem Lichtvereinheitlichungssystem (10) entlang einer Richtung parallel zu der ersten Richtung (D1) austreten, um vereinheitlichte Lichtstrahlen (LM) zu bilden, das umfasst:
ein Linsenanordnungselement (11), das einen ersten Anordnungsbereich (111) und einen zweiten Anordnungsbereich (112), die miteinander verbunden und entlang einer zweiten Richtung (D2) angeordnet sind, umfasst,
wobei der erste Anordnungsbereich (111) eine erste Lichteinfallsfläche (111a), eine erste Lichtaustrittsfläche (111b) und mehrere erste Mikrolinsen (111c) umfasst und die Lichtstrahlen (L) durch die erste Lichteinfallsfläche (111a) entlang der ersten Richtung (D1) in den ersten Anordnungsbereich (111) eintreten, durch die ersten Mikrolinsen (111c) hindurchlaufen und aus dem ersten Anordnungsbereich (111) durch die erste Lichtaustrittsfläche (111b) austreten, um erste Lichtstrahlen (L1) zu bilden,
wobei der zweite Anordnungsbereich (112) eine zweite Lichteinfallsfläche (112a), eine zweite Lichtaustrittsfläche (112b) und mehrere zweite Mikrolinsen (112c) umfasst und die ersten Lichtstrahlen (L1) durch die zweite Lichteinfallsfläche (112a) in den zweiten Anordnungsbereich (112) eintreten, durch die zweiten Mikrolinsen (112c) hindurchlaufen und aus dem zweiten Anordnungsbereich (112) durch die zweite Lichtaustrittsfläche (112b) austreten, um zweite Lichtstrahlen (L2) zu bilden;
wobei sich die erste Lichteinfallsfläche (111a) und die zweite Lichteinfallsfläche (112b) auf derselben Fläche des Linsenanordnungselements (11) befinden und die erste Richtung (D1) senkrecht zu der zweiten Richtung (D2) ist.

2. Lichtvereinheitlichungssystem nach Anspruch 1, wobei die zweiten Lichtstrahlen (L2) aus dem zweiten Anordnungsbereich (112) durch die zweite Lichtaustrittsfläche (112b) austreten und das Lichtvereinheitlichungssystem (10) verlassen, um die vereinheitlichten Lichtstrahlen (LM) zu bilden; wobei eine Lichtaustrittsrichtung der ersten Lichtstrahlen (L1) aus dem ersten Linsenanordnungsbereich (111) und eine Lichtaustrittsrichtung der zweiten Lichtstrahlen (L2) aus dem zweiten Linsenanordnungsbereich (112) zueinander entgegengesetzt und parallel zu der ersten Richtung (D1) sind.

3. Lichtvereinheitlichungssystem nach Anspruch 1 oder 2, wobei das Linsenanordnungselement (11) ferner einen Verbindungsbereich (113) umfasst, der sich zwischen dem ersten Anordnungsbereich (111) und dem zweiten Anordnungsbereich (112) in der zweiten Richtung (D2) befindet und den ersten Anordnungsbereich (111) und den zweiten Anordnungsbereich (112) verbindet, wobei die Lichtstrahlen (L1, L2) vorzugsweise nicht durch den Verbindungsbereich (113) hindurchlaufen.

4. Lichtvereinheitlichungssystem nach einem der vorhergehenden Ansprüche, wobei ein Abstand der Lichtstrahlen (L), die sich in dem ersten Anordnungsbereich (111) ausbreiten, derselbe wie ein Abstand der ersten Lichtstrahlen (L1), die sich in dem zweiten Anordnungsbereich (112) ausbreiten, ist.

5. Lichtvereinheitlichungssystem nach einem der vorhergehenden Ansprüche, das ferner eine erste Einheit zum Falten eines optischen Wegs (12) umfasst, die in einem optischen Weg der ersten Lichtstrahlen (L1) zwischen der ersten Lichtaustrittsfläche (111b) und der zweiten Lichteinfallsfläche (112a) angeordnet ist, um eine Übertragungsrichtung der ersten Lichtstrahlen (L1) zu ändern, wobei die ersten Lichtstrahlen (L1) in die erste Einheit zum Falten eines optischen Wegs (12) entlang der ersten Richtung eintreten und aus der ersten Einheit zum Falten eines optischen Wegs (12) entlang einer ersten Übertragungsrichtung austreten und die erste Übertragungsrichtung entgegengesetzt und parallel zu der ersten Richtung (D1) ist, wobei der optische Weg der ersten Lichtstrahlen (L1) zwischen der ersten Lichtaustrittsfläche (111b) und der zweiten Lichteinfallsfläche (112A) vorzugsweise U-förmig ist.

6. Lichtvereinheitlichungssystem nach einem der vorhergehenden Ansprüche, das ferner eine erste Lichtbündelungseinheit (13) umfasst, die zwischen der ersten Lichtaustrittsfläche (111b) und der zweiten Lichteinfallsfläche (112a) angeordnet ist, damit die ersten Lichtstrahlen (L1) konvergieren.

7. Lichtvereinheitlichungssystem nach Anspruch 6, wobei die erste Lichtbündelungseinheit (13) eine erste Sammellinse (131) und eine zweite Sammellinse (132) umfasst, wobei die erste Einheit zum Falten eines optischen Wegs (12) einen ersten reflektierenden Spiegel (121) und einen zweiten reflektierenden Spiegel (122) umfasst und die erste Sammellinse (131) zwischen dem ersten Anordnungsbereich (111) und dem ersten reflektierenden Spiegel (121) angeordnet ist und die zweite Sammellinse (132) zwischen dem zweiten reflektierenden Spiegel (122) und dem zweiten Anordnungsbereich (112) angeordnet ist,
wobei die ersten Lichtstrahlen (L1), die durch die erste Sammellinse (131) konvergieren, sich zu dem ersten reflektierenden Spiegel (121) der ersten Einheit zum Falten eines optischen Wegs (12) ausbreiten, was den ersten Lichtstrahlen (L1) ermöglicht, sich zu dem zweiten reflektierenden Spiegel (122) entlang der zweiten Richtung (D2) auszubreiten, was eine Übertragungsrichtung der ersten Lichtstrahlen (L1) ändert, wodurch die ersten Lichtstrahlen (L1) den zweiten reflektierenden Spiegel (122) entlang der ersten Übertragungsrichtung verlassen und nacheinander durch die zweite Sammellinse (132) und den zweiten Anordnungsbereich (122) hindurchlaufen.

8. Lichtvereinheitlichungssystem nach einem der vorhergehenden Ansprüche 5-7, das ferner ein erstes lichtstreuendes Element (14) umfasst, das zwischen der ersten Einheit zum Falten eines optischen Wegs (12) und dem zweiten Anordnungsbereich (112) angeordnet ist, wobei die ersten Lichtstrahlen (L1), die durch das erste lichtstreuende Element (14) hindurchlaufen, auf die zweite Lichteinfallsfläche (112a) einfallen.

9. Lichtvereinheitlichungssystem nach einem der vorhergehenden Ansprüche, das ferner ein zweites lichtstreuendes Element (15), das vor der ersten Lichteinfallsfläche (111a) angeordnet ist, umfasst, wobei die Lichtstrahlen (L) durch das zweite lichtstreuende Element (15) hindurchlaufen, bevor die Lichtstrahlen (L) auf die erste Lichteinfallsfläche (111a) einfallen.

10. Lichtvereinheitlichungssystem nach einem der vorhergehenden Ansprüche, wobei das Linsenanordnungselement (11) ferner einen dritten Anordnungsbereich (114) umfasst, der eine dritte Lichteinfallsfläche (114a), eine dritte Lichtaustrittsfläche (114b) und mehrere dritte Mikrolinsen (114c) umfasst; wobei der erste Anordnungsbereich (111), der zweite Anordnungsbereich (112) und der dritte Anordnungsbereich (114) nacheinander entlang der zweiten Richtung (D2) angeordnet sind; wobei sich der zweite Anordnungsbereich (112) zwischen dem ersten Anordnungsbereich (111) und dem dritten Anordnungsbereich (114) befindet und der zweite Anordnungsbereich (112) mit dem ersten Anordnungsbereich (111) und dem dritten Anordnungsbereich (114) verbunden ist; und die zweiten Lichtstrahlen (L2) in den dritten Anordnungsbereich (114) durch die dritte Lichteinfallsfläche (114a) eintreten, durch die dritten Mikrolinsen (114c) hindurchlaufen und aus dem dritten Anordnungsbereich (114) durch die dritte Lichtaustrittsfläche (114c) entlang der ersten Richtung (D1) austreten, um die dritten Lichtstrahlen (L3) zu bilden;
wobei sich die erste Lichteinfallsfläche (111a), die zweite Lichtaustrittsfläche (112b) und die dritte Lichteinfallsfläche (114a) auf derselben Fläche des Linsenanordnungselements (11) befinden.

11. Lichtvereinheitlichungssystem nach Anspruch 10, wobei die dritten Lichtstrahlen (L3) aus der dritten Lichtaustrittsfläche (114b) austreten und das Lichtvereinheitlichungssystem (10) verlassen, um die vereinheitlichten Lichtstrahlen (LM) zu bilden, und die dritten Lichtstrahlen (L3) und die ersten Lichtstrahlen (L1) aus dem Linsenanordnungselement (11) entlang der ersten Richtung (D1) austreten.

12. Lichtvereinheitlichungssystem nach Anspruch 10 oder 11, das ferner eine zweite Einheit zum Falten eines optischen Wegs (16) umfasst, die in einem optischen Weg zwischen der zweiten Lichtaustrittsfläche (112b) und der dritten Lichteinfallsfläche (114a) angeordnet ist, um eine Übertragungsrichtung der zweiten Lichtstrahlen (L2) zu ändern,
wobei die zweiten Lichtstrahlen (L2) in die zweite Einheit zum Falten eines optischen Wegs (16) entlang der ersten Übertragungsrichtung parallel zu der ersten Richtung (D1) eintreten und die zweite Einheit zum Falten eines optischen Wegs (16) entlang der ersten Richtung entgegengesetzt und parallel zu der ersten Übertragungsrichtung verlassen, wobei der optische Weg der zweiten Lichtstrahlen (L2) zwischen der zweiten Lichtaustrittsfläche (112b) und der dritten Lichteinfallsfläche (114a) U-förmig ist.

13. Lichtvereinheitlichungssystem nach Anspruch 10, 11 oder 12, das ferner ein zweites Lichtbündelungselement (17) umfasst, das auf dem optischen Weg der zweiten Lichtstrahlen (L2) zwischen der zweiten Lichtaustrittsfläche (112b) und der dritten Lichteinfallsfläche (114a) angeordnet ist, damit die zweiten Lichtstrahlen (L2) konvergieren.

14. Lichtvereinheitlichungssystem nach Anspruch 12, wobei die zweite Einheit zum Falten eines optischen Wegs (16) einen dritten reflektierenden Spiegel (161) und einen vierten reflektierenden Spiegel (162) umfasst, wobei die zweiten Lichtstrahlen (L2) aus dem zweiten Anordnungsbereich (112) von der zweiten Lichtaustrittsfläche (112b) austreten und sich zu dem dritten reflektierenden Spiegel (161) entlang der ersten Übertragungsrichtung ausbreiten, was den zweiten Lichtstrahlen (L2) ermöglicht, sich zu dem vierten reflektierenden Spiegel (162) auszubreiten, wo eine Übertragungsrichtung der zweiten Lichtstrahlen (L2) geändert wird, wodurch die zweiten Lichtstrahlen (L2) aus dem vierten reflektierenden Spiegel (162) austreten, bevor die zweiten Lichtstrahlen (L2) in den dritten Anordnungsbereich (114) eintreten.

15. Projektionsvorrichtung, die umfasst:
ein Lichtquellenmodul (2), das konfiguriert ist, Lichtstrahlen (L) auszusenden;
das Lichtvereinheitlichungssystem (10) nach einem der vorhergehenden Ansprüche, das in einem optischen Weg der Lichtstrahlen (L) angeordnet ist, wobei die Lichtstrahlen (L) auf das Linsenanordnungselement (11) durch die erste Lichteinfallsfläche (111a) des ersten Anordnungsbereichs (111) einfallen und in dem Lichtvereinheitlichungssystem (10) mehrere Male vereinheitlicht werden und die Lichtstrahlen (L2) aus dem Lichtvereinheitlichungssystem (10) austreten, um vereinheitlichte Lichtstrahlen (LM) zu bilden;
ein Lichtmodulationsmodul (30), das in einem optischen Weg der vereinheitlichten Lichtstrahlen (LM) angeordnet ist und konfiguriert ist, die vereinheitlichten Lichtstrahlen (LM) zu empfangen und die vereinheitlichten Lichtstrahlen (LM) in Bildlicht (L1) umzusetzen;
eine Projektionslinse (40), die in einem optischen Weg des Bildlichts (L1) angeordnet ist und konfiguriert ist, das Bildlicht (L1) zu projizieren.

## Revendications

1. Système d'uniformisation de la lumière (10) destiné à uniformiser des faisceaux lumineux (L) provenant d'un module de source de lumière (20), les faisceaux lumineux (L) entrant dans le système d'uniformisation de la lumière (10) le long d'une première direction (D1) et sortant du système d'uniformisation de la lumière (10) le long d'une direction parallèle à la première direction (D1) pour former des faisceaux lumineux uniformisés (LM), comportant :
un élément de matrice de lentilles (11) comportant une première région de matrice (111) et une deuxième région de matrice (112) reliées l'une à l'autre et agencées le long d'une seconde direction (D2),
dans lequel la première région de matrice (111) comporte une première surface d'incidence de lumière (111a), une première surface de sortie de lumière (111b) et une pluralité de premières microlentilles (111c), et les faisceaux lumineux (L) entrent dans la première région de matrice (111) à travers la première surface d'incidence de lumière (111a) le long de la première direction (D1), passent à travers les premières microlentilles (111c) et sortent de la première région de matrice (111) à travers la première surface de sortie de lumière (111b) pour former des premiers faisceaux lumineux (L1).
dans lequel la deuxième région de matrice (112) comporte une deuxième surface d'incidence de lumière (112a), une deuxième surface de sortie de lumière (112b) et une pluralité de deuxièmes microlentilles (112c), et les premiers faisceaux lumineux (L1) entrent dans la deuxième région de matrice (112) à travers la deuxième surface d'incidence de lumière (112a), passent à travers les deuxièmes microlentilles (112c) et sortent de la deuxième région de matrice (112) à travers la seconde surface de sortie de lumière (112b) pour former des deuxièmes faisceaux lumineux (L2) ;
dans lequel la première surface d'incidence de lumière (111a) et la deuxième surface de sortie de lumière (112b) sont situées sur une même surface de l'élément de matrice de lentilles (11), et la première direction (D1) est perpendiculaire à la seconde direction (D2).

2. Système d'uniformisation de la lumière selon la revendication 1, dans lequel les deuxièmes faisceaux lumineux (L2) sortent de la deuxième région de matrice (112) à travers la deuxième surface de sortie de lumière (112b) et quittent le système d'uniformisation de la lumière (10) pour former les faisceaux lumineux uniformisés (LM) ; une direction de sortie de lumière des premiers faisceaux lumineux (L1) provenant de la première région de matrice de lentilles (111) et une direction de sortie de lumière des deuxièmes faisceaux lumineux (L2) provenant de la deuxième région de matrice de lentilles (112) sont opposées et toutes deux parallèles à la première direction (D1).

3. Système d'uniformisation de la lumière selon la revendication 1 ou 2, dans lequel l'élément de matrice de lentilles (11) comporte en outre une région de liaison (113) située entre la première région de matrice (111) et la deuxième région de matrice (112) dans la seconde direction (D2) et reliant la première région de matrice (111) et la deuxième région de matrice (112), les faisceaux lumineux (L1, L2) ne passant pas de préférence à travers la région de liaison (113).

4. Système d'uniformisation de la lumière selon l'une quelconque des revendications précédentes, dans lequel une distance des faisceaux lumineux (L) se propageant dans la première région de matrice (111) est la même qu'une distance des premiers faisceaux lumineux (L1) se propageant dans la deuxième région de matrice (112).

5. Système d'uniformisation de la lumière selon l'une quelconque des revendications précédentes, comportant en outre une première unité de repliement de trajet optique (12) disposée dans un trajet optique des premiers faisceaux lumineux (L1) entre la première surface de sortie de lumière (111b) et la deuxième surface d'incidence de lumière (112a) pour changer une direction de transmission des premiers faisceaux lumineux (L1), dans lequel les premiers faisceaux lumineux (L1) entrent dans la première unité de repliement de trajet optique (12) le long de la première direction et sortent de la première unité de repliement de trajet optique (12) le long d'une première direction de transmission et la première direction de transmission est opposée et parallèle à la première direction (D1), le trajet optique des premiers faisceaux lumineux (L1) entre la première surface de sortie de lumière (111b) et la deuxième surface d'incidence de lumière (112a) étant de préférence en forme de U.

6. Système d'uniformisation de la lumière selon l'une quelconque des revendications précédentes, comportant en outre une première unité de condensation de lumière (13) disposée entre la première surface de sortie de lumière (111b) et la deuxième surface d'incidence de lumière (112a) pour faire converger les premiers faisceaux lumineux (L1).

7. Système d'uniformisation de la lumière selon la revendication 6, dans lequel la première unité de condensation de lumière (13) comporte une première lentille de condensation (131) et une seconde lentille de condensation (132), la première unité de repliement de trajet optique (12) comporte un premier miroir réflecteur (121) et un deuxième miroir réflecteur (122), et la première lentille de condensation (131) est disposée entre la première région de matrice (111) et le premier miroir réflecteur (121), et la seconde lentille de condensation (132) est disposée entre le deuxième miroir réflecteur (122) et la deuxième région de matrice (112),
dans lequel les premiers faisceaux lumineux (L1) ayant convergé par l'intermédiaire de la première lentille de condensation (131) se propagent jusqu'au premier miroir réflecteur (121) de la première unité de repliement de trajet optique (12), ce qui permet aux premiers faisceaux lumineux (L1) de se propager jusqu'au deuxième miroir réflecteur(122) le long de la seconde direction (D2), qui change une direction de transmission des premiers faisceaux lumineux (L1), en sorte que les premiers faisceaux lumineux (L1) quittent le deuxième miroir réflecteur(122) le long de la première direction de transmission et passent séquentiellement à travers la seconde lentille de condensation (132) et la deuxième région de matrice (122).

8. Système d'uniformisation de la lumière selon l'une quelconque des revendications 5 à 7 précédentes, comportant en outre un premier élément de diffusion de lumière (14) disposé entre la première unité de repliement de trajet optique (12) et la deuxième région de matrice (112), dans lequel les premiers faisceaux lumineux (L1) passant à travers le premier élément de diffusion de lumière (14) sont incidents sur la seconde surface d'incidence de lumière (112a).

9. Système d'uniformisation de la lumière selon l'une quelconque des revendications précédentes, comportant en outre un second élément de diffusion de lumière (15) disposé devant la première surface d'incidence de lumière (111a), dans lequel les faisceaux lumineux (L) passent à travers le second élément de diffusion de lumière (15) avant que les faisceaux lumineux (L) ne sont pas incidents sur la première surface d'incidence de lumière (111a).

10. Système d'uniformisation de la lumière selon l'une quelconque des revendications précédentes, dans lequel l'élément de matrice de lentilles (11) comporte en outre une troisième région de matrice (114) comportant une troisième surface d'incidence de lumière (114a), une troisième surface de sortie de lumière (114b) et une pluralité de troisièmes microlentilles (114c) ; la première région de matrice (111), la deuxième région de matrice (112) et la troisième région de matrice (114) sont agencées séquentiellement le long de la seconde direction (D2) ; la deuxième région de matrice (112) est située entre la première région de matrice (111) et la troisième région de matrice (114), et la deuxième région de matrice (112) est reliée à la première région de matrice (111) et à la troisième région de matrice (114) ; et les deuxièmes faisceaux lumineux (L2) entrent dans la troisième région de matrice (114) à travers la troisième surface d'incidence de lumière (114a), passent à travers les troisièmes microlentilles (114c) et sortent de la troisième région de matrice (114) à travers la troisième surface de sortie de lumière (114c) le long de la première direction (D1) pour former des troisièmes faisceaux lumineux (L3) ;
dans lequel la première surface d'incidence de lumière (111a), la deuxième surface de sortie de lumière (112b) et la troisième surface d'incidence de lumière (114a) sont situés sur une même surface de l'élément de matrice de lentilles (11).

11. Système d'uniformisation de la lumière selon la revendication 10, dans lequel les troisièmes faisceaux lumineux (L3) sortent de la troisième surface de sortie de lumière (114b) et quittent le système d'uniformisation de la lumière (10) pour former les faisceaux lumineux uniformisés (LM), et les troisièmes faisceaux lumineux (L3) et les premiers faisceaux lumineux (L1) sortent de l'élément de matrice de lentilles (11) le long de la première direction (D1).

12. Système d'uniformisation de la lumière selon la revendication 10 ou 11, comportant en outre une seconde unité de repliement de trajet optique (16) disposée dans un trajet optique entre la deuxième surface de sortie de lumière (112b) et la troisième surface d'incidence de lumière (114a) pour changer une direction de transmission des deuxièmes faisceaux lumineux (L2),
dans lequel les deuxièmes faisceaux lumineux (L2) entrent dans la seconde unité de repliement de trajet optique (16) le long de la première direction de transmission parallèle à la première direction (D1) et quittent la seconde unité de repliement de trajet optique (16) le long de la première direction opposée et parallèle à la première direction de transmission, en sorte que le trajet optique des deuxièmes faisceaux lumineux (L2) entre la deuxième surface de sortie de lumière (112b) et la troisième surface d'incidence de lumière (114a) est en forme de U.

13. Système d'uniformisation de la lumière selon la revendication 10, 11 ou 12, comportant en outre un second élément de condensation de lumière (17) disposé sur le trajet optique des deuxièmes faisceaux lumineux (L2) entre la deuxième surface de sortie de lumière (112b) et la troisième surface d'incidence de lumière (114a) pour faire converger les deuxièmes faisceaux lumineux (L2).

14. Système d'uniformisation de la lumière selon la revendication 12, dans lequel la seconde unité de repliement de trajet optique (16) comporte un troisième miroir réflecteur (161) et un quatrième miroir réflecteur (162), dans lequel les deuxièmes faisceaux lumineux (L2) sortent de la deuxième région de matrice (112) à partir de la deuxième surface de sortie de lumière (112b) et se propagent jusqu'au troisième miroir réflecteur (161) le long de la première direction de transmission, ce qui permet aux deuxièmes faisceaux lumineux (L2) de se propager jusqu'au quatrième miroir réflecteur (162), où une direction de transmission des deuxièmes faisceaux lumineux (L2) est changée, en sorte que les deuxièmes faisceaux lumineux (L2) sortent du quatrième miroir réflecteur (162) avant que les deuxièmes faisceaux lumineux (L2) n'entrent dans la troisième région de matrice (114).

15. Appareil de projection, comportant :
un module de source de lumière (2) configuré pour émettre des faisceaux lumineux (L) ;
le système d'uniformisation de la lumière (10) selon l'une quelconque des revendications précédentes disposé dans un trajet optique des faisceaux lumineux (L), dans lequel les faisceaux lumineux (L) sont incidents sur l'élément de matrice de lentilles (11) à travers la première surface d'incidence de lumière (111a) de la première région de matrice (111) et uniformisés plusieurs fois dans le système d'uniformisation de la lumière (10), et les faisceaux lumineux (L2) sortent du système d'uniformisation de la lumière (10) pour former des faisceaux lumineux uniformisés (LM) ;
un module de modulation de lumière (30) disposé dans un trajet optique des faisceaux lumineux uniformisés (LM) et configuré pour recevoir les faisceaux lumineux uniformisés (LM) et convertir les faisceaux lumineux uniformisés (LM) en lumière d'image (LI) ;
une lentille de projection (40) disposée dans un trajet optique de la lumière d'image (LI) et configurée pour projeter la lumière d'image (LI).
